# EUROPÄISCHE PATENTSCHRIFT

(11) **EP 4 314 573 B1**
(45) Veröffentlichungstag und Bekanntmachung des Hinweises auf die Patenterteilung: **01.10.2025**
(21) Anmeldenummer: 22715993.6
(22) Anmeldetag: 16.03.2022
(51) Int. Cl.: F16B 7/20, F16B 7/22, F16B 19/02

(54) **KOPPLUNGSVORRICHTUNG**
COUPLING DEVICE
DISPOSITIF D'ACCOUPLEMENT

(30) Priorität: 22.03.2021 DE 102021107006
(43) Veröffentlichungstag der Anmeldung: 07.02.2024
(73) Patentinhaber: Fresenius Medical Care Deutschland GmbH, 61352 Bad Homburg (DE)
(72) Erfinder: KIRSTGEN, Udo, 61352 Bad Homburg (DE); BERGMANN, Johanna, 61352 Bad Homburg (DE)
(74) Vertreter: Kubat, Nadine
(86) Internationale Anmeldenummer: PCT/EP2022/056785
(87) Internationale Veröffentlichungsnummer: WO 2022/200141

(56) Entgegenhaltungen:
- EP-A1- 0 791 758
- EP-A1- 2 653 255
- EP-A1- 3 374 591
- EP-A1- 3 603 451
- FR-A1- 2 668 215
- GB-A- 1 204 042
- GB-A- 2 231 363
- US-A- 3 688 352
- US-A- 5 513 622

## Beschreibung

### Technisches Gebiet

Die Erfindung bezieht sich auf eine Kopplungsvorrichtung zum Verbinden von wenigstens zwei Komponenten, wobei die Kopplungsvorrichtung wenigstens zwei Elemente aufweist. Hierfür sind für die Verbindungsherstellung die Elemente in Form einer Hülse und eines Hülsenhalters ausgebildet.

### Hintergrund

Bei der Verbindung von wenigstens zwei Komponenten stellt sich häufig das Problem, dass die Bauteile nicht immer gut handhabbar bzw. aufgrund ihrer Positionierung nicht immer gut zugänglich sind, was an der Verbindungstelle zwischen den Komponenten zu Beschädigungen führen kann. Diese Beschädigungen können z.B. aus einer verkanteten Montage der Komponenten resultieren. Sofern die Komponenten mit weiteren technischen Bauteilen in Verbindung stehen, die über eine solche Verbindung gekoppelt werden, können Montageschäden zu Beeinträchtigungen der Funktionsweise der Gerätebauteile führen. Dies ist dann besonders kritisch, wenn es sich dabei um Präzisionsbauteile handelt, wie zum Beispiel bei Wäge- oder Bilanzierungssystemen.

Aus dem Stand der Technik ist bekannt wenigstens zwei Komponenten über eine Schraubverbindung miteinander zu verschrauben. Hierbei handelt es sich im Besonderen um eine Aufnahmevorrichtung, welche mit einem Bauteil in einem Gerät verbunden ist.

Bei der Montage des Gerätes müssen daher die Aufnahmevorrichtung und das Gerätebauteil exakt zueinander ausgerichtet werden. Da sich die Aufnahmevorrichtung unterhalb des Gerätegehäuses befindet, erfordert dies ein gleichzeitiges Anheben der Aufnahmevorrichtung, eine kollineare Ausrichtung der einzelnen Bauteile und das Einbringen einer Schraube über Kopf. Der Anwender benötigt daher bei der Montage ein gewisses Geschick und Kraft um die Bauteile miteinander zu verschrauben.

Da es nicht jedem Anwender gelingt die Montageschritte unter Einhaltung einer exakten vertikalen Ausrichtung zu verschrauben, kann das zur Beschädigung des Schraubengewindes beziehungsweise des Innengewindes der Aufnahmevorrichtung führen. Sofern die Aufnahmevorrichtung an einem funktionellen Bauteil, zum Beispiel einem Wägesystem, zu befestigen ist, kann eine nicht korrekte Montage das spätere Wägeergebnis negativ beeinflussen. Ein weiterer Nachteil ist, dass eine Demontage zum Beispiel für einen Transport und eine erneute Montage aufgrund der beschädigten Verbindungsstelle nicht mehr zerstörungsfrei möglich ist, und nur mit hohem Reparaturaufwand wieder in Stand gesetzt werden kann sowie mit zusätzlichen Kosten verbunden ist.

Die US 3 688 352 beschreibt ein Verbindungselement zum im Wesentlichen starren Verzahnen zweier Elemente. Das Befestigungselement enthält ein Bolzenelement, das dazu ausgelegt ist, sich durch eine Öffnung in einem der Elemente zu erstrecken und einen Nockenschlitz aufweist, der dazu geeignet ist, einen Stift an dem anderen Element einrasten zu lassen.

In der US 2 337 457 ist eine Befestigungsvorrichtung beschrieben, um Kupplungselemente in Eingriff zu bringen, wobei zwischen einem Bolzen und einem Bolzenelement eine Feder angebracht ist
Aufgabe der Erfindung ist es daher, eine verbesserte Kopplungsvorrichtung zur Verfügung zu stellen, welche die Verbindung von wenigstens zwei Komponenten erleichtert, die Montage vereinfacht und keine Beschädigung der Verbindungstelle bei der Montage bzw. Demontage verursacht.

Diese Aufgabe wird durch eine Kopplungsvorrichtung mit den Merkmalen des Anspruchs 1 gelöst sowie mit Anspruch 11, welcher ein medizinisches Gerät mit einer Kopplungsvorrichtung beansprucht.

Weitere vorteilhafte Ausführungsformen der Erfindung ergeben sich aus den Ansprüchen 2 bis 10 bzw. 12 bis 13
Gemäß einer Ausführungsform der Erfindung zum einfachen und beschädigungsfreien Montieren von wenigstens zwei Komponenten oder Bauteilen verfügt der vornehmlich zylindrische Hülsenhalter über einen Stab, an welchem die Hülse eingehängt wird. Hierfür ist ein Durchgangsstift vorgesehen, der zu beiden Seiten des Hülsenhalters übersteht und in der Lage ist, die hakenförmige Aussparung der Hülse zu tragen. Anstelle eines einzelnen Durchgangstifts können ebenfalls zwei Stifte verwendet werden, die horizontal zueinander und auf gleicher Höhe von dem Hülsenhalter hervorstehen. Die Aufnahme der Hülse wird insbesondere durch die abgeschrägten Kanten der hakenförmigen Aussparung begünstigt, da diese aufgrund ihrer Ausgestaltung leicht über den Durchgangsstift beziehungsweise über die beiden einzelnen Stifte des Hülsenhalter gleiten können.

Durch die schräge Ausbildung der Kanten wird zudem sichergestellt, dass eine vollständige Aufnahme der Hülse mit dem Hülsenhalter bei der Montage erreicht wird, indem der Anwender ein "Einrasten" erfährt, wenn der Durchgangsstift über die Schräge der Kanten hinweg in eine Endposition der Hülse gleitet. Die Hülse kann an einer oberen Endposition vorzugsweise rund oder oval ausgebildet sein, womit eine Endposition, in welcher sich der Durchgangsstift nach richtiger Montage befindet, eindeutig definiert ist. Bereits diese erste Ausführungsform der erfindungsgemäßen Kopplungsvorrichtung stellt eine einfache und komfortable Verbindung dar, über die Bauteile oder Vorrichtungen miteinander verbunden werden können. Ein Verschrauben über Kopf während gleichzeitig die Aufnahmevorrichtung gehalten werden muss, was häufig zu einer schiefen und damit fehlerhaften Montage führt, kann somit vermieden werden.

Die Hülse der erfindungsgemäßen Kopplungsvorrichtung verfügt zusätzlich über ein Langloch, welches entgegengesetzt der hakenförmigen Aussparung angeordnet ist.

Korrespondierend zu dem Langloch verfügt der Hülsenhalter über einen zweiten Stift, der zu dem ersten Stift, dem Durchgangsstift, um 90 ° versetzt ist. Daraus ergibt sich der Vorteil, dass der zweite Stift bei der Verbindung der Hülse mit dem Hülsenhalter bereits so ausgerichtet werden kann, um direkt in das Langloch gleiten zu können. Begünstigt wird dies durch die abgeschrägten Kanten der hakenförmigen Aussparung, die somit einen Winkel vorgeben. Der zweite Stift stellt zudem sicher, dass eine Relativbewegung der Bauteile definiert erfolgt, indem der zweite Stift nur in dem Langloch geführt werden kann. Sind die Bauteile zueinander verkippt, ist eine Montage nicht möglich, da dies eine Kollision zwischen dem zweiten Stift und der Hülse verursachen würde.

Optional kann an einem ersten Ende der Hülse, welches der hakenförmigen Aussparung entgegengesetzt angeordnet ist, eine Verspannungseinrichtung vorgesehen sein. Die Hülse kann an diesem Ende ein Gewinde, vorzugsweise ein Innengewinde zur Aufnahme einer Klemmschraube aufweisen. Durch diese Klemmschraube kann der Hülsenhalter gegen die Hülse vorgespannt werden und somit die Steifigkeit der Verbindung bequem und auf einfache Weise erhöht beziehungsweise eingestellt werden. Dies stellt eine mögliche Option dar, bei der die Einschraubtiefe der Klemmschraube gering gehalten werden kann, da die Schraube nur zur Klemmung aber nicht zur Übertragung eines Biegemoments genutzt wird.

In einer bevorzugten Ausführungsform kann die Kopplungsvorrichtung als Bindeglied zwischen einer oder mehreren Komponenten fungieren, die an wenigstens einem freien Enden der Kopplungsvorrichtung angebracht werden können. Dabei entsprechen die freien Enden der Kopplungsvorrichtung dem ersten Ende der Hülse beziehungsweise dem zweiten Ende des Hülsenhalters, die jeweils distal zur Verbindungsstelle zwischen Hülse und Hülsenhalter angeordnet sind
Dieses erste freie Ende der Kopplungsvorrichtung ist somit identisch mit dem ersten Ende der Hülse, welches der hakenförmigen Aussparung entgegensetzt angeordnet ist. Für die Verbindung der Kopplungsvorrichtung mit einer weiteren Komponente, zum Beispiel einer Aufnahmevorrichtung, kann in dem ersten Ende der Hülse wenigstens eine Bohrung vorgesehen sein. Diese Bohrung kann in Form einer Steckverbindung oder eines weiteren Gewindes ausgebildet sein, zum festen Verbinden der Aufnahmevorrichtung mit der Hülse. Denkbar ist aber auch jede andere Möglichkeit, um eine Komponente an das erste freie Ende der Kopplungsvorrichtung zu montieren.)

Die Aufnahmevorrichtung umfasst eine flexible Folie oder vorzugsweise ein Gestänge mit einer Ablage und/oder einem oder mehrerer Aufnahmebehältnis(sen), welche am unteren Ende der Aufnahmevorrichtung, eingesetzt oder mit dem Gestänge verbunden werden.

Dabei können die Ablage und die ein oder mehreren Aufnahmebehältnisse in Form eines Tabletts, einer Schale, einem oder mehreren Containern, Beuteln vorzugsweise Lösungsbeuteln, oder ähnlichem ausgestaltet sein. Oder die Aufnahmebehältnisse können auf der Ablage platziert werden.

Vorzugsweise kann die Aufnahmevorrichtung an der Schnittstelle zum ersten freien Ende der Hülse mittels einer Steckverbindung oder ähnlichem bereits werkseitig einstückig mit der Hülse verbunden sein. Insbesondere kann die Steckverbindung Bestandteil der Aufnahmevorrichtung sein, welche das Gestänge trägt. Somit können die Aufnahmevorrichtung und die Hülse eine Einheit darstellen zum Verbinden mit dem Hülsenhalter. Es ist aber auch denkbar, dass die Aufnahmevorrichtung zunächst durch den Anwender über die Steckverbindung mit der Hülse verbunden werden muss.

In ähnlicher Weise kann auch das zweite Ende der Kopplungsvorrichtung mit wenigstens einer weiteren Komponente oder wenigstens einem weiteren Bauteil verbunden werden. Dabei handelt es sich bei dem zweiten freien Ende der Kopplungsvorrichtung um das Ende des Hülsenhalters, welche der Verbindungsstelle zur Hülse entgegengesetzt ist. Das zweite Ende ist dabei derart gestaltet, dass beispielsweise ein Befestigungselement vorgesehen sein kann, um den Hülsenhalter vorzugsweise an einer starren Fläche, wie einem Gehäuse oder einem funktionellen Gerätebauteil zu befestigen. Bei dem Gerätebauteil kann es sich zum Beispiel um eine Wäge- oder Bilanziervorrichtung handeln. Denkbar sind aber auch andere Komponenten oder Bauteile, wie zum Beispiel Sensoren oder ähnliches.

Vorzugsweise ist das zweite freie Ende der Kopplungsvorrichtung bereits an einem Bauteil eines Gerätes angebracht, so dass diese eine weitere Einheit bilden und die Hülse, vorzugsweise zusammen mit der Aufnahmevorrichtung, nur noch eingehängt zu werden braucht. Auf diese Weise können über die Kopplungsvorrichtung als Bindeglied mehrere Komponenten schnell, sicher, einfach und beschädigungsfrei montiert werden.

Sofern es sich bei den Gerätebauteilen um funktionelle Bauteile handelt, können montagebedingte Beeinträchtigungen oder Fehlfunktionen der funktionellen Bauteile sicher vermieden werden. Bei den funktionellen Bauteilen kann es sich vorzugsweise um ein oder mehrere Waagen, Wägezellen, Piezoelemente oder ähnliches handeln.

Die beiden Elemente der Kopplungsvorrichtung (Hülse und Hülsenhalter) können flexibel und/oder lösbar miteinander verbunden beziehungsweise verhakt werden.

Vor diesem Hintergrund der Erfindung kann die Kopplungsvorrichtung, zum Verbinden von wenigstens zwei Bauteilen, Verwendung finden in Wäge- oder Bilanziersystemen.Des Weiteren können auch medizinische Geräte eine erfindungsgemäße Kopplungsvorrichtung aufweisen. Dabei handelt es sich bei den medizinischen Geräten, insbesondere um Dialysegeräte, vorzugsweise für die Hämo- oder Peritonealdialyse.

Dabei kann es sich bei den Peritonealdialysegeräten um automatische Peritonealdialysecycler (APD) handeln, welcher zum Fluidtransport Pumpen (Rollpumpen, Membranpumpen, oder dergleichen) verwenden, als auch um gravimetrisch oder halbgravimetrisch arbeitende Peritonealdialysecycler oder - systeme (CAPD), in welchen der Fluidtransport komplett oder teilweise mittels Schwerkraft erfolgt. Diese Geräte beziehungsweise Systeme sind vielfach mit Bilanzier- und/oder Wägeeinrichtungen ausgestattet.

Es versteht sich von selbst, dass die erfindungsgemäße Kopplungsvorrichtung auch für jede beliebige andere Verbindung von Bauteilen oder Gegenständen verwendet werden kann.

In einer bevorzugten Ausführungsform ist die Kopplungsvorrichtung Bestandteil eines medizinischen Gerätes, wie zum Beispiel eines gravimetrischen Peritonealdialysecyclers. Diese weisen zum Beispiel wenigstens ein Gerätegehäuse wenigstens eine Heizschale, wenigstens einen Gerätegehäuseträger, wenigstens eine Aufnahmevorrichtung mit einer Aufnahme und/oder einem Behältnis, einer Vorrichtung zur einfachen Handhabung der Schlauchverbindungen (Organizer) sowie wenigstens einem Standfuß auf.

In einer erweiterten Ausführungsform ist vorzugsweise an der Unterseite der Aufnahme oder der Behältnisse der Aufnahmevorrichtung des medizinischen Geräts mit der Kopplungsvorrichtungein dritter Stift angebracht.

Dabei kann der dritte Stift mit der Kopplungsvorrichtung derart in Wirkverbindung stehen, dass er mittels eines weiteren Gerätebestandteils, vorzugsweise einem Standfuß eines Gerätes, eine Pendelbewegung der Aufnahmevorrichtung begrenzen kann.

Hierzu kann im Fuß des medizinischen Geräts mit der Kopplungsvorrichtung, , ein Ausschnitt vorgesehen sein. In diesen Ausschnitt kann der dritte Stift bei der Montage eingesetzt werden. Durch die Begrenzung der Pendelbewegung wird ein rasches Ausschwingen der Aufnahmevorrichtung in die Ruheposition erreicht und somit ein zügiger Behandlungsbeginn ermöglicht. Darüber hinaus dient diese Anordnung als ein zusätzlicher Schutz des Gerätes oder eines Wägesystems vor Beschädigung sofern eine unzulässige Kraft auf die Aufnahmevorrichtung einwirkt.

Durch den Ausschnitt im Standfuß und die abgeschrägten Kanten der hakenförmigen Aussparung ist somit auch eine entsprechende Führung der gesamten Aufnahmevorrichtung mit der Hülse beim Einhaken im Hülsenhalter vorgegeben, so dass der dritte Stift direkt in den Ausschnitt des Standfußes überführt wird.

Diese Anordnung trägt ebenfalls zum Gelingen einer ordnungsgemäßen Montage und damit zu einer korrekten Funktionsweise des Gerätes, insbesondere der funktionellen Bauteile bei, die über die erfindungsgemäße Kopplungsvorrichtung miteinander in Verbindung stehen.

Im Folgenden wird die erfindungsgemäße Kopplungsvorrichtung unter Bezugnahme auf die Zeichnungen näher erläutert.

Es zeigen:
- Figur 1a:: eine perspektivische Seitenansicht der beiden Elemente einer Kopplungsvorrichtung
- Figur 1b:: eine perspektivische Vorderansicht der beiden Elemente einer Kopplungsvorrichtung mit Langloch
- Figur 2:: eine perspektivische Seitenansicht der beiden Elemente einer Kopplungsvorrichtung beim Verbinden / Verhaken von Hülse und Hülsenhalter
- Figur 3:: eine perspektivische Seitenansicht der beiden verbundenen Elemente einer Kopplungsvorrichtung mit Klemmschraube
- Figur 4:: Schnittdarstellung der Kopplungsvorrichtung mit Anbindung an weitere Komponenten über die freien Enden der Kopplungsvorrichtung
- Figur 5:: Explosionszeichnung eines Cyclers insbesondere der Aufnahmevorrichtung mit drittem Stift und Standfuß
- Figur 6:: eine perspektivische Ansicht eines Peritonealdialysegerätes

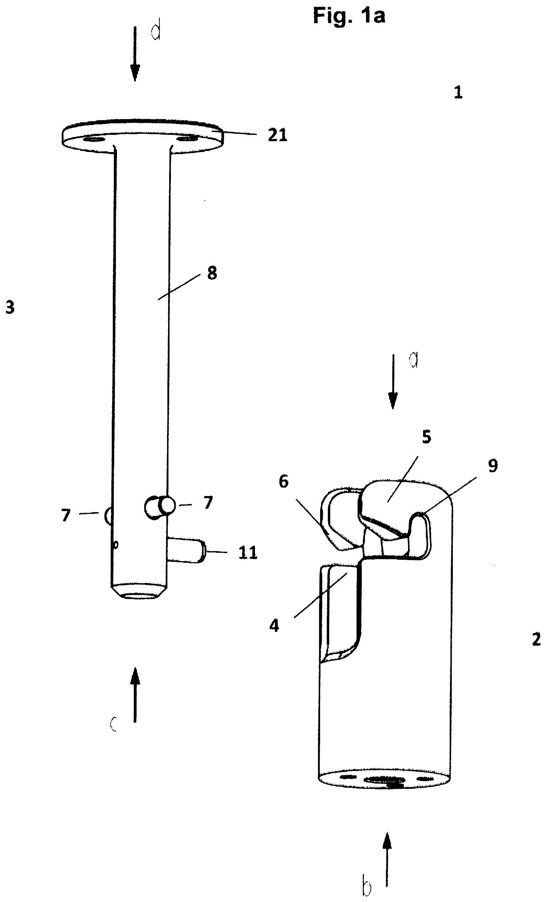

**Figur 1a** zeigt eine perspektivische Seitenansicht der beiden Elemente einer Kopplungsvorrichtung (1). Dabei umfasst die Kopplungsvorrichtung (1) wenigstens zwei verbindbare Elemente in Form einer Hülse (2) und eines Hülsenhalters (3). Die Hülse (2) weist an einer ersten Seite (a) eine Aussparung (4) auf, die beidseitig als Haken (5) ausgebildet und mit abgeschrägten Kanten (6) versehen ist. Korrespondierend zur Hülse (2) befindet sich an einer zweiten Seite (c) des Hülsenhalters (3) ein Durchgangsstift (7), der horizontal durch einen Stab (8) des Hülsenhalters (3) verläuft und zu beiden Seiten des Stabs (8) hervorsteht. Anstelle eines Durchgangsstifts (7) können beidseitig auch zwei einzelne Stifte vorgesehen sein, die auf gleicher Höhe linear zu beiden Seiten des Stabs (8) angebracht sind. Der Durchgangsstift (7) oder die einzelnen Stifte sind vorzugsweise zylindrisch ausgebildet.

Für ein einfaches und sicheres Verhaken der Hülse (2) mit dem Hülsenhalter (3) sind die Kanten (6) der hakenförmigen Aussparung (4) abgeschrägt, wobei deren lichte Weite von der Außenseite der Hülse (2) zu den Haken (5) hin abnimmt. Die Schräge kann dabei einen Winkel von 10 bis 45°, vorzugsweise von 20 bis 40° oder besonders bevorzugt von 30° einnehmen.

Entlang der abgeschrägten Kanten (6) kann die Hülse (2) daher leicht über den Durchgangsstift (7) gleiten und in einer oberen Endposition (9) der hakenförmigen Aussparung (4) einrasten. Passend zum Durchgangsstift (7) ist diese obere Endposition (9) rund oder oval ausgebildet. Dadurch wird die Hülse (2) sicher im Hülsenhalter (3) gehalten, die Endposition (9), in welcher sich der Durchgangsstift (7) nach richtiger Montage befindet, ist somit eindeutig definiert und die Kopplungsvorrichtung (1) vor einem unbeabsichtigten Lösen der Verbindung gesichert.

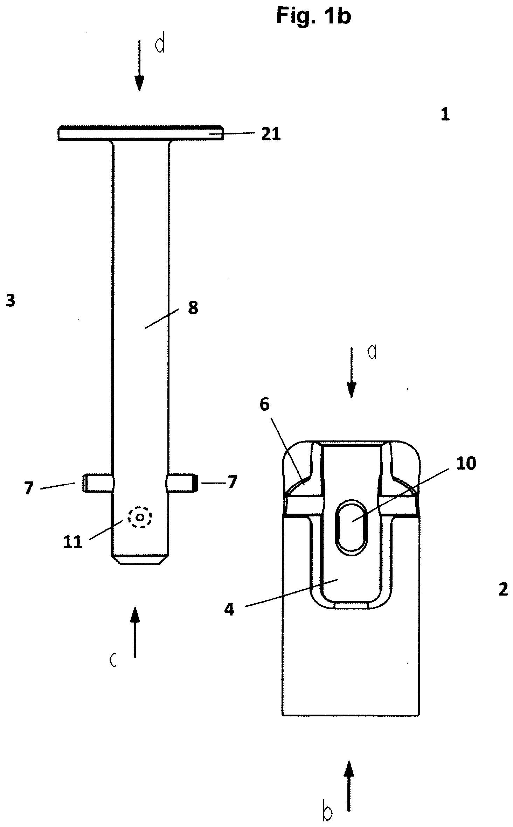

Wie in **Figur 1b** gezeigt, ist an der, der hakenförmigen Aussparung (4) abgewandten Seite der Hülse (2), ein Langloch (10) vorgesehen. Als Gegenpart verfügt der Hülsenhalter (3) über einen zweiten Stift (11), der an dem Stab (8) unterhalb und um 90° versetzt zu dem Durchgangsstift (7) angeordnet ist. Dieser zweite Stift (11) stellt sicher, dass die Kopplung der Hülse (2) und des Hülsenhalters (3) immer in der gleichen Ausrichtung oder in einem festgelegten Winkel erfolgt. Durch eine solche Ausgestaltung der beiden Elemente kann eine verkantete Montage von Bauteilen, die über die Kopplungsvorrichtung (1) miteinander verbunden werden, sicher vermieden werden. Unterstützend wirken hier auch die abgeschrägten Kanten (6), da diese bereits eine Führung vorgeben.

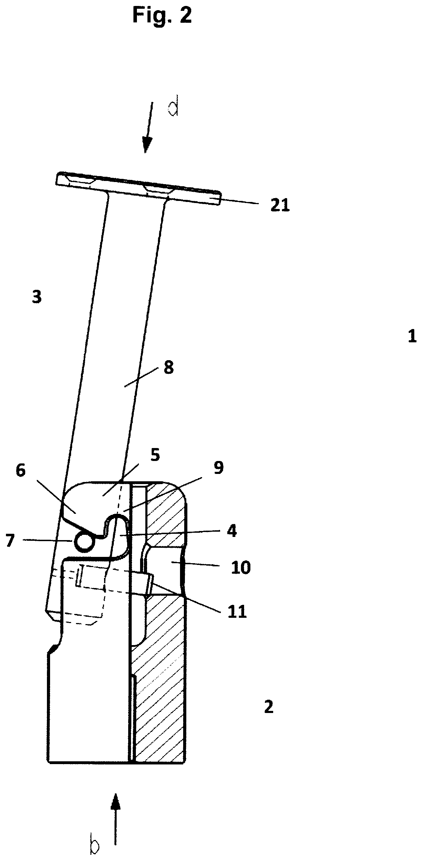

**Figur 2** zeigt eine perspektivische Seitenansicht der beiden Elemente einer Kopplungsvorrichtung (1) beim Verbinden / Verhaken von Hülse (2) und Hülsenhalter (3). Dabei lässt sich besonders gut erkennen, wie die Hülse (2) und der Hülsenhalter (3), zusammenwirken und insbesondere wie der zweite Stift (11) des Hülsenhalters (3) über die abgeschrägten Kanten (6) in das Langloch (10) geführt wird.

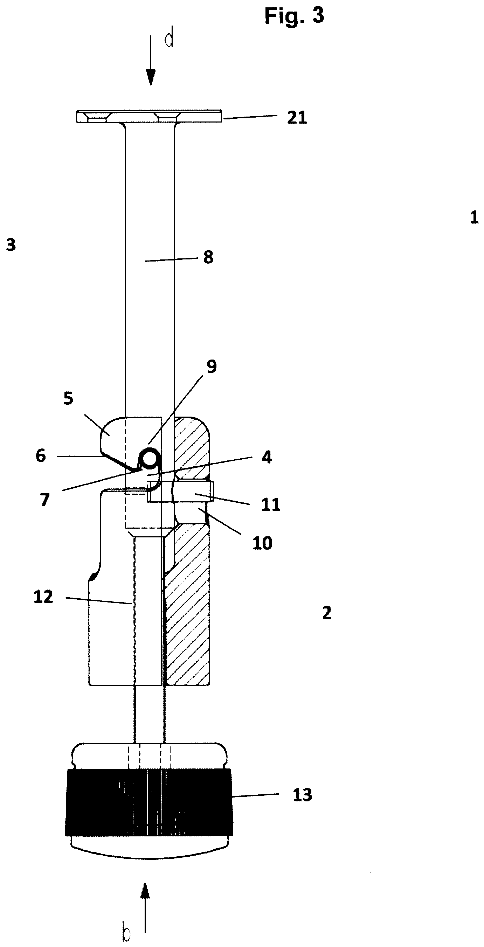

**Figur 3** zeigt eine perspektivische Seitenansicht der beiden Elemente (2, 3) der Kopplungsvorrichtung (1) nach der Kopplung. Darüber hinaus kann in einer weiteren Ausführungsform an dem ersten Ende (b) der Hülse (2) eine Verspannungseinrichtung vorgesehen sein. Hierzu verfügt die Hülse (2) an ihrem ersten Ende (b) über eine Bohrung (12 )mit einem Gewinde zum Einschrauben einer Klemmschraube (13). Das Gewinde stellt dabei vorzugsweise ein Innengewinde dar. Als Verspannungseinrichtung können ebenfalls alle weiteren Ausführungsformen zur Anwendung kommen, über die sich die Steifigkeit der Kopplungsvorrichtung (1) einstellen lässt. Denkbar wäre zum Beispiel auch ein Rastmechanismus.

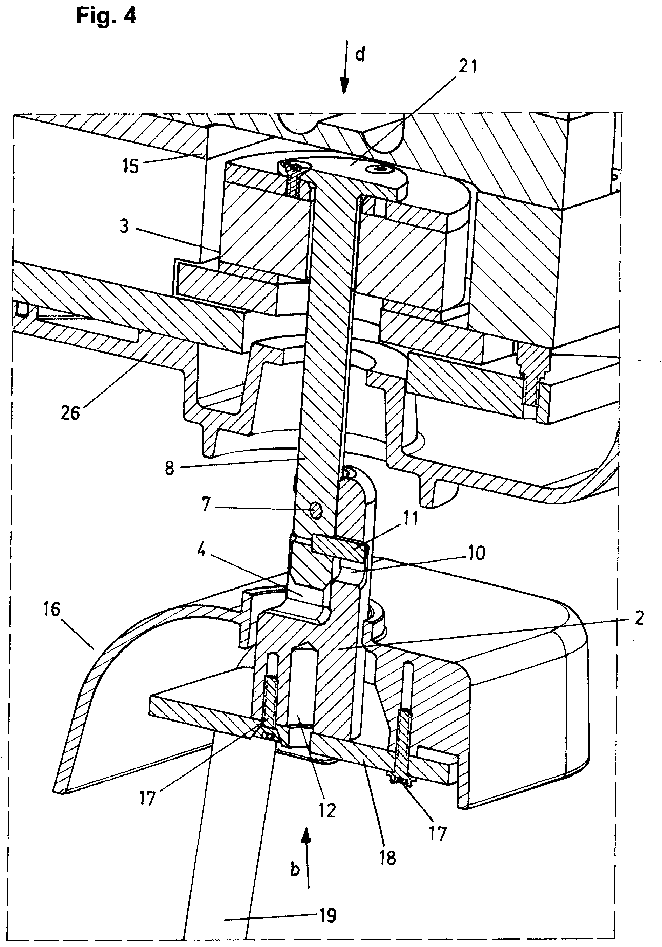

Wie bereits oben beschrieben kann die Kopplungsvorrichtung ein Bindeglied zwischen weiteren Komponenten oder Bauteilen darstellen, welche an wenigstens einem der freien Enden (b, d) der Kopplungsvorrichtung (1) angebracht werden können. Eine beispielhafte Ausführungsform zeigt die Schnittdarstellung in **Figur 4**, bei der die Kopplungsvorrichtung (1) zwischen wenigstens zwei weiteren Komponenten integriert ist. Insbesondere kann es sich bei diesen Komponenten um Gerätebauteile oder Vorrichtungen handeln.

An das erste freie Ende (b) der Kopplungsvorrichtung (1), welches durch das erste Ende der Hülse (2) gebildet wird, die der hakenförmigen Aussparung (4) entgegengesetzt angeordnet ist, kann wenigstens eine weitere Komponente, in diesem Beispiel eine Aufnahmevorrichtung (16) angekoppelt werden. Dabei verfügt das freie Ende (b) über wenigstens eine weitere Bohrung oder Gewinde (17) zum Verbinden der Aufnahmevorrichtung (16). Die Aufnahmevorrichtung (16) umfasst ein Gestänge (19), an dessen unterem Ende eine Ablage eingesetzt ist. Auf der Ablage werden die Beutel zur Aufnahme des Drainfluids platziert.

Wie aus **Figur 4** ebenfalls ersichtlich und bereits oben erwähnt, kann auch an das zweite Ende (d) der Kopplungsvorrichtung (1) wenigstens eine weitere Komponente oder Bauteil gekoppelt werden. Dabei handelt es sich bei dem zweiten freien Ende (d) der Kopplungsvorrichtung (1), um das zweite Ende des Hülsenhalters (3) welche der Verbindungsstelle mit der Hülse (2) entgegengesetzt ist. Das Ende (d) ist dabei derart gestaltet, dass beispielsweise ein Befestigungselement (21) vorgesehen ist, zur Montage an einer Wägevorrichtung (15), hier an einem Dämpfer einer Wägevorrichtung mit Wägezelle. Das freie Ende (d) und die Wägevorrichtung (15) können durch Schrauben, Kleben, Verschweißen, Verrasten, Einhängen etc. verbunden werden oder einstückig mit dem freien Ende (d) bereits verbunden sein.

Die erfindungsgemäße Kopplungsvorrichtung (1) zeichnet sich insbesondere auch dadurch aus, dass die Hülse (2) und der Hülsenhalter (3) eine gewisse Flexibilität bei der Montage zulassen und lösbar miteinander verbunden beziehungsweise verhakt werden können, was die Montage und Demontage wesentlich vereinfacht und auch eine gewisse Pendelbewegung der Aufnahmevorrichtung (16) ausgleichen kann.

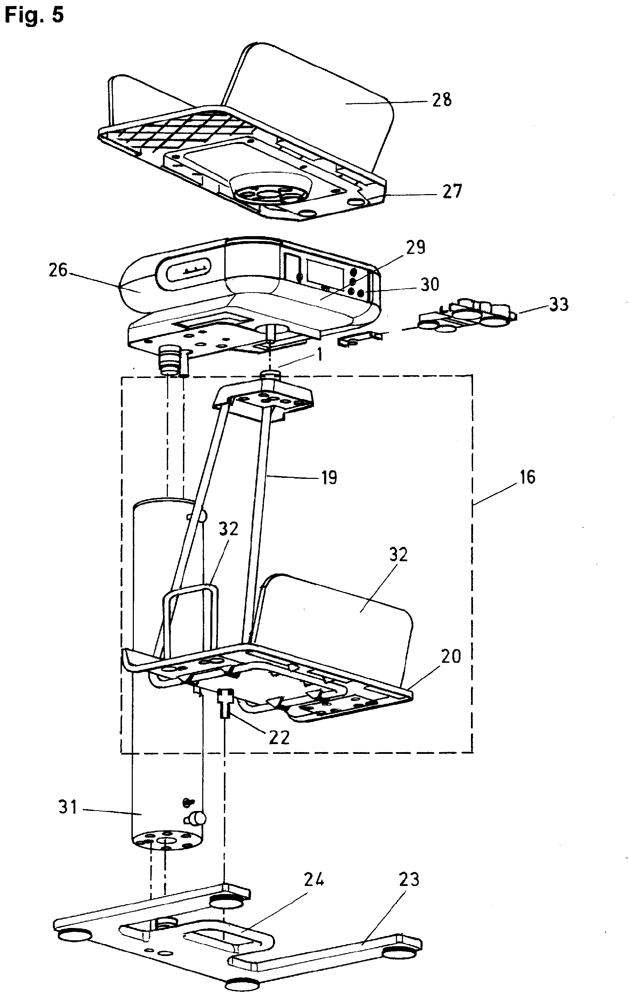

**Figur 5** zeigt, wie bereits erwähnt, den Standfuß (23) eines medizinischen Geräts mit einer Kopplungsvorrichtung, der vorzugsweise in U-Form ausgebildet sein kann, um einen sicheren Stand zu gewährleisten. Zusätzlich verfügt der Standfuß (23) über einen, vorzugsweise rechteckigen, Ausschnitt (24). In diesen Ausschnitt (24) kann ein dritter Stift (22) oder ähnliches eingesetzt werden, welcher an der Unterseite der Ablage (20) der Aufnahmevorrichtung (16) angebracht ist. Bei dieser Ausführungsform wird die Ablage (20) von dem Gestänge (19) gehalten. Anhand der Konstruktion der erfindungsgemäßen Kopplungsvorrichtung (1) und des Zusammenwirkens der Hülse (2) mit dem Hülsenhalters (3) wird der dritte Stift (22) bei dem Vorgang des Verhakens bereits so ausgerichtet, dass dieser sich direkt in den Ausschnitt (24) des Standfußes (23) einsetzt. Auf diese Weise steht der dritte Stift (22) mit der Kopplungsvorrichtung (1) unmittelbar in Wirkverbindung.

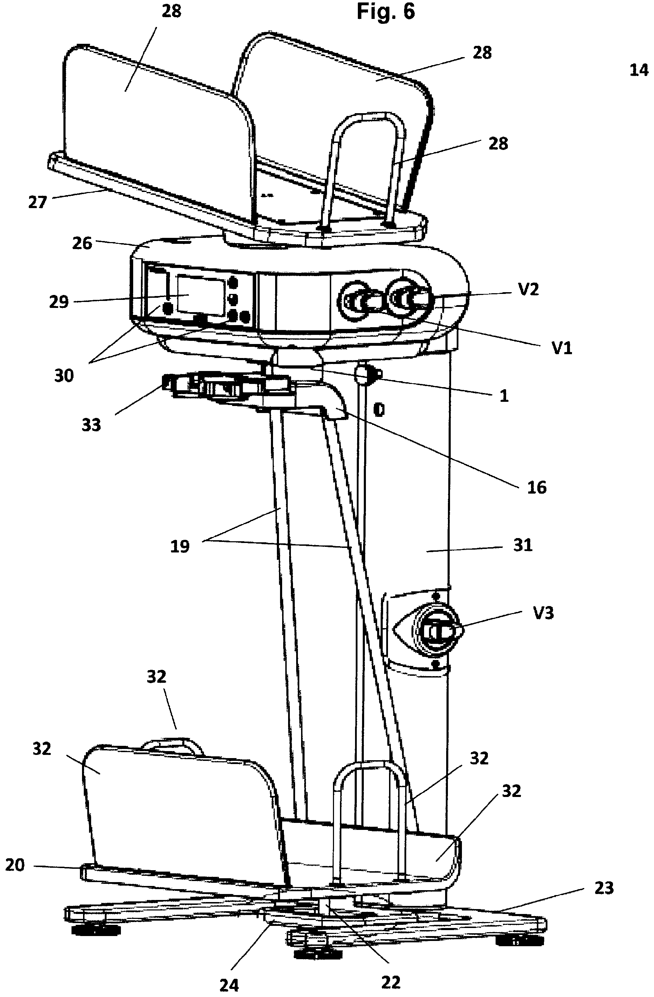

Um dem Leser einen Eindruck zu vermitteln wie die erfindungsgemäße Kopplungsvorrichtung (1) in ein Gerät eingebettet werden kann und mit den verschiedenen Komponenten des Gerätes zusammenwirkt, wird in **Figur 6** ein gravimetrisch arbeitender Peritonealdialysecycler (14) beschrieben.

Das Peritonealdialysegerät (14), umfassend ein Gerätegehäuse (26), in dem sich die zum Betrieb des Gerätes erforderliche Elektronik, wie zum Beispiel Steuer- und Regelungseinheiten befinden, sowie die Anzeige- (29) und/oder Bedieneinheiten (30). Am Gerätegehäuse (26) ist ein Organizer (33) angebracht, der eine einfache Handhabung zur Herstellung der Fluidverbindungen zwischen dem Patienten, Lösungsbeutel und Drainagebeutel ermöglicht.

Eine Heizschale (27) ist oberhalb des Gerätegehäuse (26) direkt mit diesem verbunden, zur Aufnahme von mindestens einem Lösungsbeutel, welcher frische, dem Patienten zuzuführende Dialyselösung enthält. Die Heizschale (27) verfügt weiterhin über Seitenteile (28) zum Stabilisieren der Lösungsbeutel. Die Heizschale steht ebenfalls mit der Wägeeinrichtungin Verbindung zur Bilanzierung des Dialysats in dem oder den Lösungsbeutel(n).

An der Unterseitedes Gerätegehäuses (26) beziehungsweise an einer Wägeeinrichtung (15), ist mittels der erfindungsgemäßen Kopplungsvorrichtung (1), eine Aufnahmevorrichtung (16) an das Gerät angebunden, umfassend ein Gestänge (19) und eine Ablage (20) für mindestens einem Drainagebeutel, in den das gebrauchte, vom Patienten stammende Drainfluid gelangt. Dabei erstreckt sich das Gestänge (19) von der Rückseite der Ablage (20) nach oben zu der Unterseite des Gerätegehäuses (26). Die Ablage (20) dient somit gleichzeitig als Wägeschale. Weiterhin weist die Ablage (20) ebenfalls Seitenteile (32) auf, um die Drainagebeutel von einem Verrutschen zu sichern.

Die Seitenteile (28, 32) der Heizschale (27) als auch der Ablage (20) können durch Steckverbindungen befestigt oder relative zur Auflagefläche verschwenkbar sein, so dass die Beutel bequem eingelegt und entnommen werden können.

Das Gerätegehäuse (26) ist an einem sich vertikal erstreckten Gerätegehäuse-träger (31) in Form einer Standsäule befestigt, an den sich an seinem unteren Ende ein Standfuß (23) anschließt. Der Standfuß (23) ist vorzugsweise U-förmig ausgebildet und weist einen rechteckigen Ausschnitt (24) auf, der von der Querseite in den U-förmigen Bereich hineinragt. In diesen Ausschnitt greift der dritte Stift (22) ein, indem er bei der Montage der Hülse (2) mit dem Hülsehalter (3) aufgrund deren speziellen Geometrie bereits so ausgerichtet ist, dass er über den Rand der rechteckigen Aussparung (24) gleitet.

Das Peritonealdialysegerät (14) ist weiterhin ausgebildet zur Aufnahme eines Schlauchsystems (nicht dargestellt), wobei das Schlauchsystem, wenigstens drei Leitungsabschnitte zum Verbinden mit wenigstens einen Drainagebeutel, wenigstens einen Lösungsbeutel und einem Patienten, umfasst. Für die Fluidverbindung zwischen dem mindestens einen Lösungsbeutel und dem Patienten sind die Ventile (V1) und (V2) am Gerätegehäuse (26) vorgesehen sowie ein Drainageventil (V3), welches an dem Gehäuseträger (31) zur Fluidverbindung zwischen dem Patienten beziehungsweise den Lösungsbeuteln und dem mindestens einem Drainagebeutel.

Das Gewicht der Lösungsbeutel und/oder der Drainagebeutel, die sich auf der Ablage (20) der Aufnahmevorrichtung (16) beziehungsweise der Heizschale (27) befinden wird mittels des Wägesystems (15), welche eine oder mehrere Wägezellen aufweisen kann, erfasst und an einen Prozessor übermittelt und zur weiteren Datenverarbeitung gespeichert. Dabei kann es sich um einen Prozessor im Gerät (14) handeln oder um ein externes Gerät, an welches die Messdaten kabelgebunden oder kabellos übermittelt und zur weiteren Datenverarbeitung gespeichert werden.

## Patentansprüche

1. Kopplungsvorrichtung (1), welche wenigstens zwei verbindbare Elemente in Form einer Hülse (2) und eines Hülsenhalters (3) umfasst, die Hülse (2) an einer ersten Seite (a) eine Aussparung (4) aufweist die beidseitig als Haken (5) ausgebildet und mit abgeschrägten Kanten (6) versehen ist und der Hülsenhalter (3) an einer zweiten Seite (c) einen horizontal verlaufenden Durchgangsstift (7) aufweist **dadurch gekennzeichnet, dass** die Hülse (2) der hakenförmigen Aussparung (4) ein Langloch (10) aufweist, welches der hakenförmigen Aussparung (4) entgegengesetzt angeordnet ist, und der Hülsenhalter (3) unterhalb des Durchgangsstifts (7) einen zweiten Stift (11) aufweist, der um 90° zum Durchgangsstift (7) versetzt ist.

2. Kopplungsvorrichtung (1) nach Anspruch 1, **dadurch gekennzeichnet, dass** die lichte Weite der abgeschrägten Kanten (6) der hakenförmigen Aussparung (4) von der Außenseite der Hülse (2) zu den Haken (5) hin abnimmt und dabei einem Winkel von 10 bis 45°, vorzugsweise von 20 bis 40°, besonders bevorzugt von 30° einnimmt.

3. Kopplungsvorrichtung (1) nach Anspruch einem der vorherigen Ansprüche, **dadurch gekennzeichnet, dass** die hakenförmige Aussparung (4) der Hülse (2) in einer oberen Endposition (9), die vorzugsweise rund oder oval ausgebildet ist, einrastet.

4. Kopplungsvorrichtung (1) nach einem der vorherigen Ansprüche, **dadurch gekennzeichnet, dass** die Hülse (2) an einem ersten Ende (b) eine Verspannungseinrichtung aufweist, die vorzugsweise als Gewinde (12) zur Aufnahme einer Klemmschraube (13) ausgebildet ist.

5. Kopplungsvorrichtung (1) nach einem der vorherigen Ansprüche **dadurch gekennzeichnet, dass** an wenigstens einem der freien Enden (b, d) der Kopplungsvorrichtung (1) eine oder mehrere Komponenten angebracht sind.

6. Kopplungsvorrichtung (1) nach einem der vorherigen Ansprüche, **dadurch gekennzeichnet, dass** die Kopplungsvorrichtung (1) an dem ersten freien Ende (b), welches durch die Hülse (2) gebildet wird, wenigstens eine Bohrung oder Gewinde (17) aufweist zum Verbinden mit einer weiteren Komponente.

7. Kopplungsvorrichtung (1) nach Anspruch 6, **dadurch gekennzeichnet, dass** die weitere Komponente eine Aufnahmevorrichtung (16) ist und eine flexible Folie oder vorzugsweise ein Gestänge (19) mit einer Ablage (20) und / oder einem oder mehrerer Aufnahmebehältnis(sen) umfasst.

8. Kopplungsvorrichtung (1) nach einem der vorherigen Ansprüche, **dadurch gekennzeichnet, dass** an einem zweiten Ende (d) der Kopplungsvorrichtung (1), welche durch den Hülsenhalter (3) gebildet wird, ein Befestigungselement (21) vorgesehen ist, zur Montage an einer starren Fläche, vorzugsweise einem Gerätegehäuse oder Gerätebauteil.

9. Kopplungsvorrichtung (1) nach Anspruch 8, **dadurch gekennzeichnet, dass** die weitere Komponente mindestens eine Wägeeinrichtung (15) ist, welche vorzugsweise mit wenigstens einer Waage, Wägezelle, Piezoelement in Verbindung steht.

10. Kopplungsvorrichtung (1) nach einem der vorherigen Ansprüche, **dadurch gekennzeichnet, dass** die Hülse (2) und der Hülsenhalter (3) der Kopplungsvorrichtung (1) flexibel und lösbar miteinander verbunden werden können.

11. Medizinisches Gerät mit einer Kopplungsvorrichtung (1) nach einem der vorherigen Ansprüche, **dadurch gekennzeichnet, dass** das medizinische Gerät, vorzugsweise ein Dialysegerät, besonders bevorzugt ein Hämödialysegerät, ein automatisches Peritonealdialysegerät, ein gravimetrischer Peritonealdialysecycler oder -system ist.

12. Medizinisches Gerät mit einer Kopplungsvorrichtung (1) nach Anspruch 11, **dadurch gekennzeichnet, dass** die Aufnahmevorrichtung (16) an der Unterseite der Ablage oder des/den Aufnahmebehältnis(sen) (20) ein dritter Stift (22) angebracht ist.

13. Medizinisches Gerät mit einer Kopplungsvorrichtung (1) nach Anspruch 11 und 12, **dadurch gekennzeichnet, dass** das medizinische Gerät einem Standfuß (23) mit einem Ausschnitt (24) aufweist und der dritte Stift (22) mit dem Ausschnitt (24) im Standfuß in Wirkverbindung mit der Kopplungsvorrichtung steht.

## Claims

1. Coupling device (1), which comprises at least two connectable elements in the form of a sleeve (2) and a sleeve holder (3), the sleeve (2) has, at a first side (a), a recess (4) which is configured on both sides as hooks (5) and is provided with bevelled edges (6), and the sleeve holder (3) has, at a second side (c), a horizontally extending through-pin (7), **characterized in that** the sleeve (2) of the hook-shaped recess (4) has an oblong hole (10), which is arranged opposite the hook-shaped recess (4), and the sleeve holder (3) has, below the through-pin (7), a second pin (11) offset by 90° from the through-pin (7).

2. Coupling device (1) according to Claim 1, **characterized in that** the clear width between the bevelled edges (6) of the hook-shaped recess (4) decreases from the outside of the sleeve (2) towards the hooks (5) and thus assumes an angle of 10 to 45°, preferably of 20 to 40°, particularly preferably of 30°.

3. Coupling device (1) according to either of the preceding claims, **characterized in that** the hook-shaped recess (4) of the sleeve (2) latches in an upper end position (9), which is preferably round or oval.

4. Coupling device (1) according to any one of the preceding claims, **characterized in that** the sleeve (2) has, at a first end (b), a bracing device which is preferably configured as a thread (12) for receiving a clamping screw (13).

5. Coupling device (1) according to any one of the preceding claims, **characterized in that** one or more components are mounted on at least one of the free ends (b, d) of the coupling device (1).

6. Coupling device (1) according to any one of the preceding claims, **characterized in that** the coupling device (1), at the first free end (b) formed by the sleeve (2), has at least one bore or thread (17) for connection to a further component.

7. Coupling device (1) according to Claim 6, **characterized in that** the further component is a receiving device (16) and comprises a flexible film or preferably a linkage system (19) with a shelf (20) and/or one or more receiving vessel(s).

8. Coupling device (1) according to any one of the preceding claims, **characterized in that**, at a second end (d) of the coupling device (1) formed by the sleeve holder (3), a fastening element (21) is provided for mounting on a rigid surface, preferably on an apparatus housing or apparatus part.

9. Coupling device (1) according to Claim 8, **characterized in that** the further component is at least one weighing device (15), which is preferably connected to at least one balance, weighing cell or piezo element.

10. Coupling device (1) according to any one of the preceding claims, **characterized in that** the sleeve (2) and the sleeve holder (3) of the coupling device (1) can be connected to each other flexibly and releasably.

11. Medical apparatus having a coupling device (1) according to any one of the preceding claims, **characterized in that** the medical apparatus is preferably a dialysis apparatus, particularly preferably a haemodialysis apparatus, an automated peritoneal dialysis apparatus, or a gravimetric peritoneal dialysis cycler or system.

12. Medical apparatus having a coupling device (1), according to Claim 11, **characterized in that** the receiving device (16) has a third pin (22) mounted on the underside of the shelf or of the receiving vessel(s) (20).

13. Medical apparatus having a coupling device (1), according to Claims 11 and 12, **characterized in that** the medical apparatus has a stand (23) with a cutout (24), and the third pin (22) is operatively connected to the cutout (24) in the stand with the coupling device.

## Revendications

1. Dispositif d'accouplement (1), qui comprend au moins deux éléments pouvant être reliés sous la forme d'une douille (2) et d'un support de douille (3), la douille (2) présentant sur un premier côté (a) un évidement (4) qui est réalisé des deux côtés sous forme de crochet (5) et qui est pourvu d'arêtes biseautées (6) et le support de douille (3) présentant sur un deuxième côté (c) une broche de passage (7) s'étendant horizontalement, **caractérisé en ce que** la douille (2) de l'évidement (4) en forme de crochet présente un trou oblong (10) qui est agencé à l'opposé de l'évidement (4) en forme de crochet, et le support de douille (3) présente, en dessous de la broche de passage (7), une deuxième broche (11) qui est décalée de 90° par rapport à la broche de passage (7).

2. Dispositif d'accouplement (1) selon la revendication 1, **caractérisé en ce que** la largeur intérieure des arêtes biseautées (6) de l'évidement en forme de crochet (4) diminue depuis le côté extérieur de la douille (2) vers les crochets (5), et forme un angle de 10 à 45°, de préférence de 20 à 40°, de manière particulièrement préférée de 30°.

3. Dispositif d'accouplement (1) selon l'une quelconque des revendications précédentes, **caractérisé en ce que** l'évidement en forme de crochet (4) de la douille (2) s'enclenche dans une position d'extrémité supérieure (9), qui est de préférence réalisée sous forme ronde ou ovale.

4. Dispositif d'accouplement (1) selon l'une quelconque des revendications précédentes, **caractérisé en ce que** la douille (2) présente à une première extrémité (b) un moyen de serrage, qui est de préférence réalisé sous forme de filetage (12) pour recevoir une vis de serrage (13).

5. Dispositif d'accouplement (1) selon l'une quelconque des revendications précédentes, **caractérisé en ce qu'**un ou plusieurs composants sont montés sur au moins l'une des extrémités libres (b, d) du dispositif d'accouplement (1).

6. Dispositif d'accouplement (1) selon l'une quelconque des revendications précédentes, **caractérisé en ce que** le dispositif d'accouplement (1) présente, à la première extrémité libre (b) formée par la douille (2), au moins un alésage ou un filetage (17) pour la liaison à un autre composant.

7. Dispositif d'accouplement (1) selon la revendication 6, **caractérisé en ce que** l'autre composant est un dispositif de réception (16) et comprend un film flexible ou de préférence une tringlerie (19) avec un plateau (20) et/ou un ou plusieurs récipients de réception.

8. Dispositif d'accouplement (1) selon l'une quelconque des revendications précédentes, **caractérisé en ce qu'**un élément de fixation (21) est prévu à une deuxième extrémité (d) du dispositif d'accouplement (1), qui est formé par le support de douille (3), pour le montage sur une surface rigide, de préférence un boîtier d'appareil ou un composant d'appareil.

9. Dispositif d'accouplement (1) selon la revendication 8, **caractérisé en ce que** l'autre composant est au moins un moyen de pesage (15), qui est de préférence en liaison avec au moins une balance, une cellule de pesage, un élément piézoélectrique.

10. Dispositif d'accouplement (1) selon l'une quelconque des revendications précédentes, **caractérisé en ce que** la douille (2) et le support de douille (3) du dispositif d'accouplement (1) peuvent être reliés ensemble de manière flexible et détachable.

11. Appareil médical avec un dispositif d'accouplement (1) selon l'une quelconque des revendications précédentes, **caractérisé en ce que** l'appareil médical est de préférence un appareil de dialyse, de manière particulièrement préférée un appareil d'hémodialyse, un appareil de dialyse péritonéale automatique, un recycleur ou un système de dialyse péritonéale gravimétrique.

12. Appareil médical avec un dispositif d'accouplement (1) selon la revendication 11, **caractérisé en ce que** le dispositif de réception (16) est doté d'une troisième broche (22) montée au côté inférieur du plateau ou du ou des récipients (20).

13. Dispositif médical avec un dispositif d'accouplement (1) selon les revendications 11 et 12, **caractérisé en ce que** le dispositif médical présente un pied (23) avec une découpe (24) et la troisième broche (22) est en liaison fonctionnelle avec le dispositif d'accouplement avec la découpe (24) dans le pied.
